# EUROPEAN PATENT APPLICATION

(11) **EP 1 864 773 A2**
(43) Date of publication of application: **12.12.2007**
(21) Application number: 07108413.1
(22) Date of filing: 17.05.2007
(51) Int. Cl.: B28B 11/04, B41F 17/26

(54) **Method and apparatus for producing ceramic products**

(30) Priority: 09.06.2006 IT MO20060183
(71) Applicant: Tecno-Europa S.r.l., 41043 Formigine (IT)
(72) Inventor: Fiandri, Giancarlo, 41048, Prignano sulla Secchia (MO) (IT)
(74) Representative: Crugnola, Pietro

(57) **Abstract**

A method for producing ceramic products (4) provided with a corrugated surface (20) comprises depositing on a semifinished ceramic product (3), obtained by pressing a ceramic material, a further ceramic material (11) in fluid state for forming said corrugated surface (20); an apparatus for producing ceramic products (4) comprises pressing means (30) arranged for pressing ceramic material for obtaining a semifinished ceramic product (3) and distributing means (5) so shaped as to deposit on said semifinished ceramic product (3) further ceramic material (11) in fluid state to form a corrugated surface (20) of said ceramic product (4).

## Description

The invention relates to an apparatus and a method for producing ceramic products provided with corrugated surfaces, in particular for producing so-called "rustic" ceramic products.

For producing ceramic products provided with a visible face provided with a surface displaying ridges and cavities production systems are known comprising presses arranged for compacting a loose ceramic material, in particular an atomised ceramic material.

Such presses enable tiles to be obtained that are provided with corrugated surfaces, for example tiles that reproduce the roughness, the surface irregularities, the ridges and the cavities of natural stone or brick that has possibly been partially worn through prolonged use.

The presses used for compacting the ceramic material and forming an unfired ceramic tile are provided with one or more pairs of opposite punches.

The shape of the surfaces of each of the punches, which compress the ceramic material, determines the shape of a corresponding face of the unfired ceramic tile.

Generally, one of the punches has a surface provided with ridges arranged according to a geometric pattern to form a first face of the tile.

This first face is intended to come into contact with an adhesive substance through which the tile is fixed to a floor or to a wall.

The second punch forms a second face of the tile that is intended to remain visible after the tile has been fixed to a floor or to a wall.

The second punch can be provided with a smooth forming surface.

In order to produce ceramic tiles provided with corrugated surfaces, instead of smooth punches, punches are used that are provided with a surface that negatively reproduces the roughness, the surface irregularities, the ridges and the cavities that have to be obtained on the tiles.

In this way ceramic tiles can be produced that are subsequently decorated and fired to obtain a finished product provided with a corrugated surface.

For each type of ceramic tile that it is desired to produce dedicated punches are necessary. This means that, in order to produce batches of different types of tile, a plurality of corresponding punches has to be provided.

A drawback of the systems disclosed above is the poor versatility thereof.

In fact, when batches of different types of tile are produced in succession, the press has to be reequipped each time that a change is made from the production of tiles or a certain type to the production of tiles of a different type. In other words, the punches used for the batch that has already been produced have to be dismantled from the press and the latter has to be reequipped with further punches corresponding to the type of tiles to be produced in the new batch.

The step of replacing the punches requires a very long time. If small batches of different types of tiles provided with a corrugated surface have to be produced in succession, the long time taken to equip the press for each new batch entails high operating costs.

An object of the invention is to improve the methods for obtaining ceramic products provided with corrugated surfaces.

Another object of the invention is to obtain an apparatus and a method for producing, in a more versatile manner, ceramic products provided with corrugated surfaces.

In a first aspect of the invention, there is provided a method for producing ceramic products provided with a corrugated surface, comprising depositing on a semifinished ceramic product, obtained by pressing a ceramic material, and a further ceramic material in fluid state for forming said corrugated surface.

In a second aspect of the invention, there is provided an apparatus for producing ceramic products, comprising pressing means arranged for pressing ceramic material for obtaining a semifinished ceramic product, characterised in that it further comprises distributing means so shaped as to deposit on said semifinished ceramic product further ceramic material in fluid state to form a corrugated surface of said ceramic product.

In a third aspect of the invention, there is provided the use of a deformable transferring element that is provided externally with cavities as a means for depositing a further ceramic material in fluid state to form a corrugated surface on a semifinished ceramic product obtained by pressing a ceramic material,.

Owing to these aspects of the invention there can be obtained ceramic products provided with a corrugated surface without making use of correspondingly corrugated punches.

The further ceramic material that forms the corrugated surface is deposited after the ceramic product has been formed in a press.

The further ceramic material, after being deposited on the semifinished ceramic product, adheres permanently to the latter.

The press can be equipped with smooth punches, as the corrugated surface is obtained not during pressing but subsequently thereto.

Additionally, it is not necessary to replace the smooth punches inasmuch as different corrugated surfaces can be obtained by selectively depositing the further ceramic material so as to obtain a desired pattern.

As the punches, for example the smooth punches, can be maintained on the press for the entire working life thereof without having to be replaced, the productivity of the manufacturing systems for manufacturing ceramic products is significantly increased, as downtime is drastically reduced. The invention can be better understood and implemented with reference to the attached drawings that illustrate an embodiment thereof by way of non-limiting example, in which:
Figure 1 is a schematic side view of a machine for producing ceramic products provided with a corrugated surface;
Figure 2 is a cross section of a semifinished ceramic product on which fluid ceramic material was deposited;
Figure 3a is a diagram of a system for producing ceramic products-provided with a corrugated surface;
Figure 3b is a diagram of a further system for producing ceramic products provided with a corrugated surface.

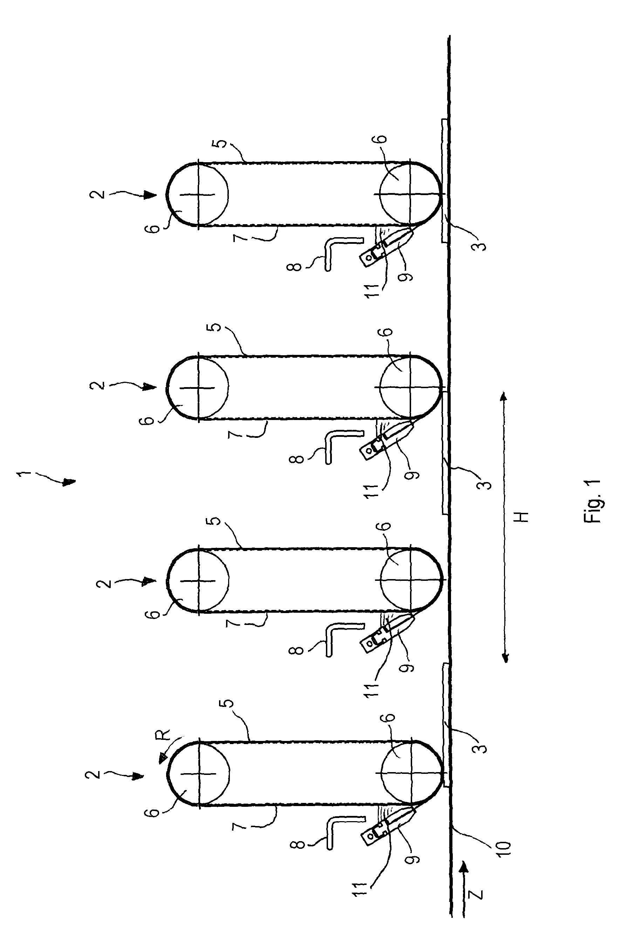

Figure 1 shows a machine 1 arranged for selectively depositing fluid ceramic material 11 on semifinished ceramic products, for example ceramic tiles 3 obtained by pressing and having a smooth face 21.

The machine 1 comprises a plurality of depositing devices 2, each of which is provided with tubular depositing means 5 shaped as belts and is provided with driving means 6 for rotating the tubular depositing means 5 in a rotation direction R.

Alternatively, the depositing means 5 can be shaped as rollers rather than as belts.

These rollers can be flexible or be internally provided with a stiffening structure, for example made of metal.

The rollers can be provided, at opposite longitudinal ends, with flanges that enable the rollers to be installed on rotating driving devices.

The tubular depositing means 5 comprises a transferring surface 7, arranged for interacting with the ceramic tiles 3, on which there is made a plurality of cavities of small dimensions.

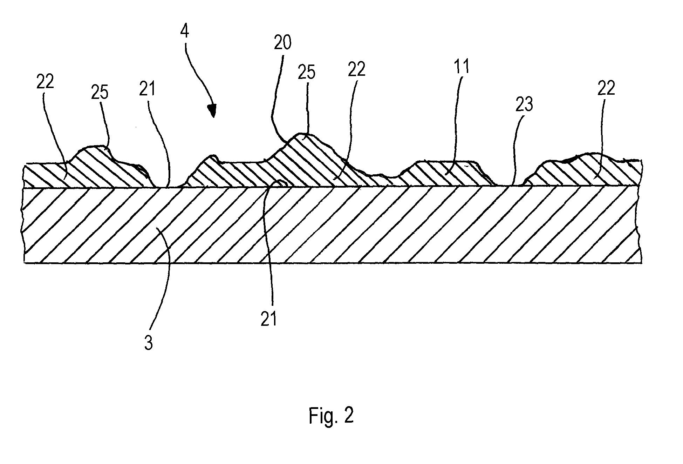

The cavities receive and subsequently deposit on a ceramic tile 3 quantities of fluid ceramic material 11 to form a corrugated surface 20 (Figure 2) of a ceramic product 4.

The corrugated surface 20 of the ceramic product 4, defined by the whole of the ceramic tile 3 and the fluid ceramic material 11, has roughness, surface irregularities, cavities and similar ridges to those of natural stone or brick.

In particular, the ceramic product 4 can be a so-called "rustic" ceramic tile.

The dimension and the position of the aforesaid cavities determine the thickness and the position of the unevenness created on the ceramic tile 3.

The fluid ceramic material 11 is deposited selectively and with a desired thickness on preset zones of the face 21 of the ceramic tile 3.

The depositing means 5 - shaped as limp or stiff belts, hollow or solid rollers - can be made, at least partially, of a deformable material, for example an elastomeric material, in particular silicone rubber.

In particular, the transferring surface 7 is made of deformable material.

Each depositing device 2 further comprises a supply conduit 8, arranged for pouring the fluid ceramic material 11 onto the tubular depositing means 5, and a doctor 9 positioned downstream of the supply conduit 8 with respect to the rotation direction R and arranged for introducing the fluid ceramic material 11 into the aforesaid cavities to remove the excess ceramic material 11 from the transferring surface 7.

To the fluid ceramic material 11 taken from the supply conduit 8 before the step of depositing on the ceramic tiles 3, substances can be added, for example adhesive substances provided with properties that promote the formation of a layer having mechanical and structural features such as to prevent the unevenness created on the surface of the ceramic tile 3, disintegrating before or during the step of firing the ceramic product 4.

The fluid ceramic material 11, as soon as it has been deposited on the ceramic tile 3, adheres permanently to the face 21 of the latter.

The machine 1 further comprises a conveying device 10 that moves the ceramic tiles 3 in an advancing direction Z towards and away from the depositing devices 2.

The ceramic tiles 3 are formed from atomised ceramic material compressed in presses provided with punches and positioned upstream of the machine 1.

As shown in Figure 1, it is possible to provide a plurality of depositing devices 2 arranged one after the other along the advancing direction Z.

This enables, for example, various layers of fluid ceramic material 11 to be deposited on top of one another to make unevenness of larger dimensions than that produced using a sole depositing device 2.

Further, each depositing device 2 can deposit fluid ceramic material 11 at preset zones of the ceramic tile 3 to make a corrugated surface 20 having a particular pattern.

In an embodiment, the fluid ceramic material can comprise a ceramic body, of the type that forms ceramic tiles 3, to which a ceramic pigment has been added.

In this case, each of the supply devices can supply a fluid ceramic material having a particular colour.

This enables corrugated surfaces to be obtained that differ from one another not only in terms of shape and dimensions of the unevenness, but also in terms of the colour of the latter.

Fluid ceramic materials of different colours can also be used if the ceramic products 4 are subsequently subjected to decoration as the colouring of the corrugated surface influences the final colour tone.

The tubular depositing means 5 installed on each depositing device 2 are suitable for creating the unevenness defined by the cavities present on the transferring surface 7 thereof. This unevenness is reproduced periodically, at each revolution of the tubular depositing means 5, on the ceramic tiles 3 moved by the conveying device 10.

By using transferring surfaces 7 having a length that is not a multiple of the distance H between two ceramic tiles 3 advancing on the conveying device 7, a high number of different corrugated surfaces can be obtained and so it is possible to differentiate further the ceramic products produced. This is an advantage in the production of so-called "rustic" ceramic tiles, inasmuch as these products emphasise, for aesthetic reasons, slight differences between one piece and another in the same batch.

By arranging in the machine 1 printing devices 2 provided with transferring surfaces 7 having a different length from one another, the variety of producible corrugated surfaces can be further extended.

Owing to the invention it is possible to obtain ceramic products provided with corrugated surfaces having any type of pattern starting from ceramic tiles provided with faces all having the same conformation, in particular, starting from ceramic tiles having a smooth face.

In this way it is not necessary to replace the punches of the press to change over from producing ceramic products of a certain type to producing a ceramic product of a different type.

Further, owing to the invention if various types of ceramic products have to be produced having corrugated surfaces that are different from one another, the time required to replace the depositing means is just a few minutes and not several hours as in the case when the punches of the press have to be substituted.

In Figure 2 there is shown a section of a ceramic product 4 provided with a corrugated surface 20.

In Figure 2 the ceramic tile 3 and the fluid ceramic material 11 deposited on a surface of the tile 3 are shown by different broken lines.

The fluid ceramic material 11 is deposited selectively and therefore cavity zones 23 are present in which the fluid ceramic material 11 has not been deposited and in which the face 21 of the ceramic tile 3 emerges and depositing zones 22, in which the fluid ceramic material 11 has been deposited to form a surface provided with crests 25.

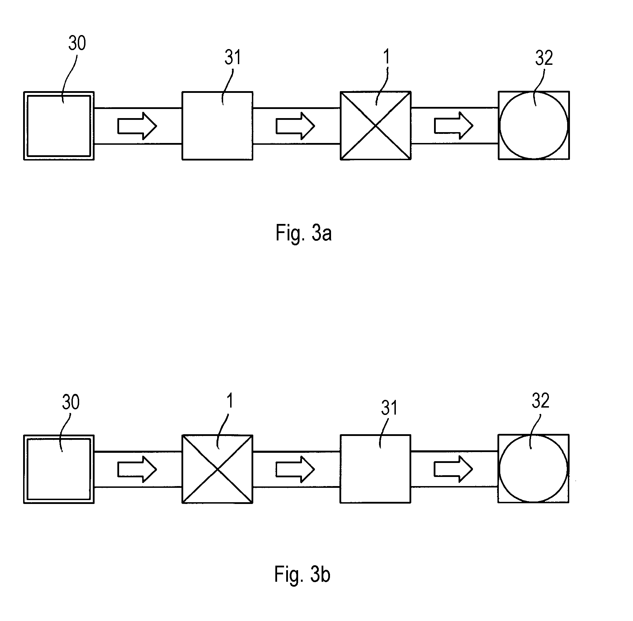

Figures 3a and 3b show diagrams that show the arrangement of the machine 1 inside a production system for producing ceramic products provided with a corrugated surface.

A first embodiment of the system, shown in Figure 3a, arranges in succession a press 30, a dryer 31, the machine 1 and possibly decorating devices 32.

A second embodiment of the system, shown in Figure 3b, arranges the machine 1 upstream of the dryer 31.

Downstream of the decorating devices 32 there are provided firing kilns that are not shown.

## Claims

1. Method for producing ceramic products (4) provided with a corrugated surface (20), comprising depositing on a semifinished ceramic product (3), obtained by pressing a ceramic material, a further ceramic material (11) in fluid state for forming said corrugated surface (20).

2. Method according to claim 1, wherein said depositing comprises introducing said further ceramic material (11) into cavity means of deformable transferring means (5) and transferring said further ceramic material (11) from said cavity means to said semifinished ceramic product (3).

3. Method according to claim 2, wherein said deformable transferring means comprises tubular means (5).

4. Method according to any preceding claim, wherein said semifinished ceramic product is a ceramic tile (3).

5. Method according to claim 4, wherein said ceramic tile (3) is provided with a face (21) opposite an installation zone.

6. Method according to claim 5, wherein said face is a flat face (21).

7. Method according to claim 5, or 6, wherein said depositing comprises depositing said further ceramic material (11) on said face (21).

8. Method according to any preceding claim, wherein said depositing comprises selectively distributing said further ceramic material (11) on said semifinished ceramic product (3).

9. Method according to any preceding claim, wherein, after said depositing, there is provided drying said semifinished ceramic product (3) and said further ceramic material (11).

10. Method according to any one of claims 1 to 8, wherein, before said depositing, there is provided drying said semifinished ceramic product (3).

11. Method according to any preceding claim, wherein after said depositing there is provided decorating said corrugated surface (20).

12. Method according to claim 11 as appended to claim 9, or 10, wherein said decorating is provided after said drying.

13. Apparatus for producing ceramic products (4), comprising pressing means (30) arranged for pressing ceramic material for obtaining a semifinished ceramic product (3), **characterised in that** it further comprises distributing means (5) so shaped as to deposit on said semifinished ceramic product (3) further ceramic material (11) in fluid state to form a corrugated surface (20) of said ceramic product (4).

14. Apparatus according to claim 13, wherein said pressing means (30) comprises punch means arranged for forming a face (21) in said semifinished ceramic product (3), said distributing means (5) being so positioned as to deposit said further ceramic material (11) on said face (21) .

15. Apparatus according to claim 14, wherein said punch means is so shaped as to form said face as a flat face (21).

16. Apparatus according to any one of claims 13 to 15, wherein said distributing means (5) is so shaped as to distribute selectively said further ceramic material (11) on said semifinished ceramic product (3).

17. Apparatus according to any one of claims 13 to 16, wherein said distributing means comprises deformable transferring means (5) provided externally with cavity means arranged for receiving said further ceramic material (11) and for transferring said further ceramic material (11) to said ceramic product (3).

18. Apparatus according to claim 17, wherein said deformable transferring means comprises tubular means (5).

19. Apparatus according to claim 17, or 18, wherein said transferring means (5) comprises transfer surface means (7) in which there is obtained said cavity means.

20. Apparatus according to claim 19, and further comprising doctor means (9) arranged for inserting said further ceramic material (11) into said cavity means and for removing an excess of said further ceramic material (11) from said transfer surface means (7).

21. Apparatus according to any one of claims 13 to 20, wherein said distributing means comprises a plurality of distributing devices (5) arranged in succession along an advancing direction (Z) along which said semifinished ceramic product (3) is moved.

22. Apparatus according to any one of claims 13 to 21, wherein said distributing means (5) is interposed between said pressing means (30) and decorating means (32) arranged for decorating said corrugated surface (20).

23. Apparatus according to any one of claims 13 to 22, wherein said distributing means (1) is positioned upstream of drying means (31) arranged for drying said semifinished ceramic product (3) and said further ceramic material (11).

24. Apparatus according to any one of claims 13 to 22, wherein said distributing means (5) is positioned downstream of drying means (31) arranged for drying said semifinished ceramic product (3).

25. Use of a deformable transferring element (5) that is provided externally with cavities as means for depositing on a semifinished ceramic product (3), obtained by pressing a ceramic material, a further ceramic material (11) in fluid state to form a corrugated surface (20).

26. Use according to claim 25, wherein said deformable transferring element comprises a tubular element.
